# EUROPÄISCHE PATENTSCHRIFT

(11) **EP 1 328 155 B1**
(45) Veröffentlichungstag und Bekanntmachung des Hinweises auf die Patenterteilung: **27.04.2016**
(21) Anmeldenummer: 01985227.6
(22) Anmeldetag: 07.09.2001
(51) Int. Cl.: A01N 31/08, A01N 43/78, C14C 9/00, C14C 1/02

(54) **WIRKSTOFFKOMBINATIONEN ZUM SCHUTZ VON TIERISCHEN HÄUTEN UND VON LEDER**
COMBINATIONS OF ACTIVE INGREDIENTS FOR PROTECTING ANIMAL SKINS AND LEATHER
COMBINAISONS DE PRINCIPES ACTIFS SERVANT A PROTEGER LES PEAUX D'ANIMAUX ET LE CUIR

(30) Priorität: 19.09.2000 DE 10046265
(43) Veröffentlichungstag der Anmeldung: 23.07.2003
(73) Patentinhaber: LANXESS Deutschland GmbH, 50569 Köln (DE)
(72) Erfinder: ROTHER, Heinz-Joachim, 47803 Krefeld (DE); REHBEIN, Hartmut, 47447 Moers (DE); KUGLER, Martin, 42799 Leichlingen (DE)
(86) Internationale Anmeldenummer: PCT/EP2001/010303
(87) Internationale Veröffentlichungsnummer: WO 2002/023985

(56) Entgegenhaltungen:
- EP-A- 0 237 225
- EP-A- 0 571 846
- EP-A- 0 631 723
- EP-A- 0 816 349
- EP-A- 0 880 892
- EP-A- 0 922 386
- EP-A- 0 923 867
- EP-A- 1 018 413
- WO-A-96/27483
- WO-A-98/56959
- DD-A- 137 846
- DD-A- 265 421
- JP-K1- S56 113 706
- US-A- 4 915 943
- US-A- 5 185 357
- US-A- 5 244 893
- US-A- 5 498 344
- US-A- 5 944 880
- PATENT ABSTRACTS OF JAPAN & JP 08 277371 A (KANEBO KASEI KK), 22. Oktober 1996 (1996-10-22)
- PATENT ABSTRACTS OF JAPAN & JP 07 247201 A (MITSUI TOATSU CHEM INC), 26. September 1995 (1995-09-26)
- DEAN T. DIDATO AND STEPHEN S. YANEK: "Fungicides in Military Leather: n additional Option for Tanners Producing Specification Leathers" JALCA, Bd. 94, 1999, Seiten 245-258, XP002277157
- PATENT ABSTRACTS OF JAPAN & JP 08 183704 A (NIPPON SODA CO LTD; SOMAR CORP.), 16. Juli 1996 (1996-07-16)
- DATABASE WPI Derwent Publications Ltd., London, GB; AN 1985-064786 XP002277158 "Antiseptic and antifungal agent for industrial materials-contains mixt. of 1,2:dibromo 2,4-di:cyano-butane and 1,2-benzisothiazolin-3-one" & JP 60 019704 A (HOKKO CHEM IND CO LTD), 31. Januar 1985 (1985-01-31)
- DATABASE WPI Derwent Publications Ltd., London, GB; AN 1996-482065 XP002277159 "Industrial bactericides and antiseptics for industrial use-comprises benzisothiazolin-3-one, its alkali salt and/or 3H-1,2-benzo:di:thio-3-one" & JP 08 245318 A (DAITO KAGAKU KK;MARUZEN YAKUHIN SANGYO KK;SHOEI KAGAKU KK), 24. September 1996 (1996-09-24)
- DATABASE WPI Derwent Publications Ltd., London, GB; AN 1989-266922 XP002277160 "WAter-colour composition for drawing with improved putrefaction resistance-contains tetra:chloro-methyl:sulphonyl-pyridine antiseptic, antifungal compound,pigment,filler.water and resin." & JP 01 193372 A (SAKURA KUREPASU KK), 3. August 1989 (1989-08-03)
- DATABASE WPI Derwent Publications Ltd., London, GB; AN 1981-76975D XP002277161 "Antifungal composition containing 2-n-octyl-4-isothiazolin-3-one and e.g. 2-(4-thiazolyl)benzimidazole, p-methyl phenyl iodomethyl sulphone, and 3.5-dimethyl-4-chlorophenol, used industrially" & JP 56 113706 A (NISSAN CHEM IND LTD), 7. September 1981 (1981-09-07)
- C.HAUBER UND H.-P. GERMANN: "Untersuchungen zum Einsatz von Konservierungsmitteln in der Chromgerbung und ihrer quantitativen Verteilung im Wet-blue." DAS LEDER, Bd. 6, 1996, Seiten 189-195, XP009028834
- PATENT ABSTRACTS OF JAPAN vol. 008, no. 041 (C-211), 22. Februar 1984 (1984-02-22) -& JP 58 201864 A (PENTEL KK), 24. November 1983 (1983-11-24)

## Beschreibung

Die vorliegende Anmeldung betrifft die Verwendung von Wirkstoffkombinationen enthaltend phenolische Wirkstoffe und fungizide Isothiazolinon Wirkstoffe zur Konservierung von tierischen Häuten und Leder.

Bekannt ist, dass Phenolderivate sowie Gemische oder Formulierungen hiervon als Materialschutzmittel bei der Lederherstellung verwendet werden können. Es hat sich aber gezeigt, dass diese Verbindungen allein oder in Kombination eingesetzt, nach einiger Zeit keinen ausreichenden Schutz gegen Mikrobenbefall bei lagernden Häuten und Leder bieten.

Bekannt ist ferner, dass Benzimidazole, Imidazole, Triazole und/oder Morpholin-Derivate in Kombination mit phenolischen Verbindungen einen Schutz der tierischen Häute und Leder während der Herstellung und deren Lagerung ermöglichen (US 5 888 415). Bekannt ist auch die Verwendung von 2-Mercaptopyridin-N-oxid und dessen Salze zur Konservierung von Leder (WO 98/56959).

In das Dokument "Das Leder, Bd. 6, 1996, Seiten 189-95, C.Hauber,und H.-P. Germann" werden die Verbindungen TCMTB sowie OIT jeweils einzeln und lediglich CMP und oPP als Gemisch (CMP/oPP) zur Konservierung von Häuten und Leder eingesetzt und deren fungizide Wirkung verglichen.

Überraschend wurde nun gefunden, dass Kombinationen von bestimmten fungiziden Reaktiv-Wirkstoffen ausgewählt aus der Gruppe Benzisothiazolinon (BIT), Octylisothiazolinon (OIT), Dichloroctylisothiazolinon (DCOIT), und zwei bestimmten phenolischen Wirkstoffen hervorragend zur Konservierung von tierischen Häuten und Leder geeignet sind.

Als phenolische Wirkstoffe kommen 3-Methyl-4-chlorphenol, 3,5-Dimethyl-4-chlorphenol, o-Phenylphenol, 2-Benzyl-4-chlorphenol (Chlorophen), sowie deren Ammonium-, Alkali- und Erdalkalisalze sowie deren Gemische in Frage.

Bevorzugt sind Kombinationen enthaltend 3,5-Dimethyl-4-chlorphenol, 2-Benzyl-4-chlorphenol (BP), 3-Methyl-4-chlorphenol (CMK) und/oder o-Phenylphenol (OPP) als phenolische Bestandteile und eines oder mehrere der oben genannten Fungizide.

Insbesondere seien die folgenden Kombinationen genannt:
CMK/OPPBenzisothiazolinon (BIT)
CMK/OPP/Octylisothiazolinon (OIT)
CMK/OPP/Dichloroctylisothiazolinon (DCOIT)
CMK/BP/Benzisothiazolinon (BIT)
CMK/BP/Octylisothiazolinon (OIT)
CMK/BP/Dichloroctylisothiazolinon (DCOIT)

Die oben genannten fungiziden und phenolischen Verbindungen sind bekannt, siehe z.B. "Microbicides for the Protection of Materials, Chapmann & Hall, 1993".

Im Allgemeinen werden auf 1 Gewichtsteil eines oder mehrerer der genannten Fungizide in den Kombinationen 5 bis 200, vorzugsweise 10 bis 100 und besonders bevorzugt 12 bis 50 Gewichtsteile an einem oder mehreren der genannten phenolischen Verbindungen eingesetzt.

Liegen in den erfindungsgemäßen Kombinationen mehrere phenolische Verbindungen vor, so kann deren Verhältnis untereinander in großen Grenzen variiert werden. Günstige Verhältnisse sind dabei durch übliche, dem Fachmann bekannte Versuche in einfacher Weise zu ermitteln.

In der Regel liegt das Gewichtsverhältnis zwischen zwei phenolischen Verbindungen zwischen 1:1 und 1:10.

Liegt beispielsweise in einer erfindungsgemäßen Kombination OPP neben CMK vor, so liegt das bevorzugte Gewichtsverhältnis OPP:CMK zwischen 1:1 und 1:5.

Überraschenderweise zeigen die erfindungsgemäßen Kombinationen eine synergistische Wirkung, d.h. die Wirkung der Kombination ist größer als die Wirkung der einzelnen Wirkstoffe.

Die erfindungsgemäßen Kombinationen der Wirkstoffe werden im Allgemeinen in Form von Formulierungen eingesetzt. Dabei beträgt die Anwendungskonzentration vorzugsweise 0,1 bis 1 % Wirkstoff bzw. Wirkstoffmischung bezogen auf die zu schützenden Häute bzw. Leder.

Die bei der Formulierung entstehenden Mittel enthalten die Wirkstoffmischung vorzugsweise zu 10 bis 50 %. Als weitere Bestandteile enthalten die Mittel im Allgemeinen 0 bis 30 % Alkali- und/oder Erdalkalihydroxide; 0 bis 20 % ionische und/oder nicht-ionische Emulgatoren; 5 bis 60 % organische Lösemittel wie insbesondere Glykole, Ketone, Glykolether, Alkohole wie Ethanol, Methanol, 1,2-Propandiol, n-Propanol sowie 0 bis 0,5 % Aroma- und Duftstoffe. Der Rest zu 100 % ist Wasser oder organisches Lösungsmittel wie z.B. 1,2-Propandiol. Die angegebenen Prozente sind Gewichts-%.

Die Wirkstoffinischungen und die daraus herstellbaren Mittel werden erfindungsgemäß nach allgemein üblichen Anwendungsmethoden bei der Lederherstellung zum Schutz von tierischen Häuten gegen Angriff und Beschädigung durch Mikroorganismen verwendet. Dabei ist von besonderem Interesse, dass Vertreter der Species Aspergillus niger, Aspergillus repens, Hormoconis resinae, Penicillium glaucum und Trichoderma viride, Penicillium-Arten wie P. citrinum oder P. glaucum, Paecilomyces variotii, Cladosporium-Arten sowie Mucor-Arten wie Mucor mucedo, Rhizopus-Arten wie Rhizopus oryzae, Thizopus rouxii vollständig und dauerhaft unterdrückt werden.

Die nachfolgenden Beispiele dienen zur Erläuterung der Erfindung und sind nicht auf diese beschränkt.

### Beispiel 1

Agarplatten werden mit Konidien der Species Aspergillus niger, Aspergillus repens, Penicillium glaucum, Trichoderma viride und Hormoconis resinae kontaminiert. Anschliessend werden mit Mischung I, II und Mischung III behandelte feuchte Chromleder (wet blue) aufgelegt und 28 Tage bei 95 % relativer Luftfeuchtigkeit und 20 bis 30°C inkubiert.

| Mischung I | | Mischung II | |
|---|---|---|---|
| 30 | Gew.-Teile p-Chlor-m-kresol | 10 | Gew.-Teile Octylisothiazolinon |
| 13 | Gew.-Teile o-Phenylphenol | | |
| | | | |

| Mischung III | | | |
|---|---|---|---|
| 30 | Gew.-Teile p-Chlor-m-kresol | | |
| 10 | Gew.-Teile 2-Benzyl-4-chlorphenol | | |
| 2 | Gew.-Teile Octylisothiazolinon | | |

Die mit der Mischung I und Mischung II konservierten wet blues zeigen schon nach 10 Tagen Inkubationszeit Schimmelwachstum auf den Prüfkörpern. Im Fall von Mischung III wird nach 28 Tagen Inkubationszeit kein Befall festgestellt.

### Beispiel 2

| Formulierung I | | Formulierung II | |
|---|---|---|---|
| 30 | Gew.-Teile p-Chlor-m-kresol | 27 | Gew.-Teile p-Chlor-m-kresol |
| 13 | Gew.-Teile o-Phenylphenol | 12 | Gew.-Teile 2-Benzyl-4-chlorphenol |
| 2 | Gew.-Teile Octylisothiazolinon | 1 | Gew.-Teil Octylisothiazolinon |
| 12 | Gew.-Teile NaOH | Rest zu 100 Gew. Teile 1,2-Propandiol | |
| 14 | Gew.-Teile 1,2-Propandiol | | |
| Rest zu 100 Gew. Teile Wasser | | | |

## Patentansprüche

1. Mischungen enthaltend
• fungizide Reaktiv-Wirkstoffe ausgewählt aus der Gruppe Benzisothiazolinon (BIT), Octylisothiazolinon (OIT), Dichloroctylisothiazolinon (DCOIT) und
• zwei phenolische Wirkstoffe ausgewählt aus der Reihe 3-Methyl-4-chlorphenol, 3,5-Dimethyl-4-chlorphenol, o-Phenylphenol, 2-Benzyl-4-chlorphenol (Chlorophen), sowie deren Ammonium-, Alkali- und Erdalkalisalze, in einem Gewichtsverhältnis zwischen 1:1 und 1:10.

2. Verwendung einer Mischung gemäß Anspruch 1 bei der Lederherstellung zum Schutz von tierischen Häuten und Leder gegen Angriff und Schädigung durch Mikroorganismen.

3. Verwendung einer Mischung nach Anspruch 1 zur Herstellung von Mitteln zum Schutz von tierischen Häuten und Leder vor mikrobiellen Befall bei der Lederherstellung.

4. Verfahren zum Schützen von tierischen Häuten und Leder vor mikrobiellen Befall bei der Lederherstellung, **dadurch gekennzeichnet, dass** man die Häute bzw. Leder mit einer Mischung nach Anspruch 1 behandelt.

5. Mikrobizide Mittel enthaltend eine Mischung nach Anspruch 1, sowie die für Mittel vom Schutz von tierischen Häuten und Leder üblichen Bestandteilen.

## Claims

1. Mixtures containing
• fungicidal reactive active compounds selected from the group consisting of benzisothiazolinone (BIT), octylisothiazolinone (OIT), dichlorooctylisothiazolinone (DCOIT) and
• two phenolic active compounds selected from the series consisting of 3-methyl-4-chlorophenol, 3,5-dimethyl-4-chlorophenol, o-phenylphenol, 2-benzyl-4-chlorophenol (chlorophene), and their ammonium, alkali metal and alkaline earth metal salts, in a weight ratio between 1:1 and 1:10.

2. Use of a mixture according to Claim 1 in leather manufacture for protecting animal hides and leather against attack and damage by microorganisms.

3. Use of a mixture of Claim 1 for the production of compositions for protecting animal hides and leather from microbial attack in leather manufacture.

4. Method of protecting animal hides and leather from microbial attack in leather manufacture, **characterized in that** the hides or the leather is/are treated with a mixture of Claim 1.

5. Microbicidal compositions comprising a mixture of Claim 1, and the conventional constituents for compositions for protecting animal hides and leather.

## Revendications

1. Mélanges comprenant
- des principes actifs réactifs fongicides sélectionnés parmi le groupe comprenant benzisothiazolinone (BIT), octylisothiazolinone (OIT), dichloroctylisothiazolinone (DCOIT) et
- deux principes actifs phénoliques sélectionnés parmi la série 3-méthyl-4-chlorophénol, 3,5-diméthyl-4-chlorophénol, o-phénylphénol, 2-benzyl-4-chlorophénol (chlorophène), ainsi que leurs sels d'ammonium, alcalins et alcalinoterreux dans un rapport pondéral compris entre 1:1 et 1:10.

2. Utilisation d'un mélange selon la revendication 1 lors de la production de cuir pour protéger les peaux d'animaux et le cuir contre l'attaque et l'endommagement par des micro-organismes.

3. Utilisation d'un mélange selon la revendication 1 pour la préparation de moyens pour protéger les peaux d'animaux et le cuir contre une infestation microbienne lors de la production du cuir.

4. Procédé pour protéger des peaux d'animaux et du cuir contre une infestation microbienne lors de la production du cuir, **caractérisé en ce que** l'on traite les peaux ou le cuir avec un mélange selon la revendication 1.

5. Moyen microbicide contenant un mélange selon la revendication 1 ainsi que les constituants usuels pour les moyens de protection des peaux d'animaux et du cuir.
